# EUROPÄISCHE PATENTSCHRIFT

(11) **EP 0 632 968 B1**
(45) Veröffentlichungstag und Bekanntmachung des Hinweises auf die Patenterteilung: **24.09.1997**
(21) Anmeldenummer: 94107755.4
(22) Anmeldetag: 19.05.1994
(51) Int. Cl.: A24D 3/10, A24D 3/14

(54) **Filtertow und Verfahren zu dessen Herstellung sowie Tabakrauchfilterelement und Verfahren zu dessen Herstellung**
Filtertow and process for its manufacture and tobacco smoke filter and process for its manufacture
Cordon filtrant et son procédé de fabrication ainsi qu'un filtre pour fumée de tabac et son procédé de fabrication

(30) Priorität: 09.07.1993 DE 4322967
(43) Veröffentlichungstag der Anmeldung: 11.01.1995
(73) Patentinhaber: RHONE-POULENC RHODIA AKTIENGESELLSCHAFT, 79108 Freiburg (DE)
(72) Erfinder: Willmund, Rolf, D-79312 Emmendingen (DE)
(74) Vertreter: Hagemann, Heinrich, Dr.rer.nat., Dipl.-Chem.

(56) Entgegenhaltungen:
- EP-A- 0 597 478
- WO-A-93/07771
- FR-A- 2 324 247
- DATABASE WPI Derwent Publications Ltd., London, GB; AN 91-329098 & JP-A-03 219 861 (DAICEL CHEM. IND. KK) 27. September 1991
- Englische Übersetzung des Prioritätsbelegs JP328646/92

## Beschreibung

Die Erfindung betrifft ein Filtertow, bestehend aus Celluloseacetatfilamenten und/oder Celluloseacetatspinnfasern, auf deren Oberfläche ein Zusatzmittel vorhanden ist.
Die Erfindung betrifft ferner ein Verfahren zur Herstellung eines solchen Filtertows durch im wesentlichen
- Erspinnen von Celluloseacetatfilamenten durch Pressen einer Lösung von Celluloseacetat mit einer Acetylzahl von mindestens 53 % in Aceton durch eine Spinndüse mit mehreren Öffnungen und gegebenenfalls anschließendes Zerschneiden der Celluloseacetatfilamente zu Celluloseacetatspinnfasern,
- Zusammenfassen einer Vielzahl der so erhaltenen Celluloseacetatfilamente und/oder Celluloseacetatspinnfasern zu einem Filtertow
   und
- Aufbringen eines Zusatzmittels auf die Oberfläche der Celluloseacetatfilamente und der Celluloseacetatspinnfasern.

Die Erfindung betrifft auch ein Tabakrauchfilterelement bestehend aus einem Abschnitt eines queraxial verdichteten, mit Hilfe eines Weichmachers für Celluloseacetat oder eines Klebstoffes gehärteten Filtertows aus Celluloseacetatfilamenten und/oder Celluloseacetatspinnfasern, auf deren Oberfläche ein Zusatzmittel vorhanden ist.
Schließlich betrifft die Erfindung ein Verfahren zur Herstellung eines solchen Tabakrauchfilterelements durch Versehen eines Filtertows, bestehend aus Celluloseacetatfilamenten und/oder Celluloseacetatspinnfasern, mit einem Weichmacher für Celluloseacetat oder einem Klebstoff, anschließendes queraxiales Verdichten und gegebenenfalls Umhüllen dieses Filtertows mit einem Umhüllungsstreifen, Zerschneiden des so verdichteten und gegebenenfalls umhüllten Filtertows in einzelne Tabakrauchfilterstäbe und schließlich Zerschneiden dieser Tabakrauchfilterstäbe in einzelne Tabakrauchfilterelemente.

Zigarettenfilter verrotten vergleichsweise langsam und sind deshalb an Plätzen, an denen viel geraucht wird, für weite Teile der Bevölkerung ein Ärgernis.

Für die überwiegende Zahl der Zigarettenfilter wird heute faserförmiges Celluloseacetat mit einer Acetylzahl zwischen 53 % und 57 % eingesetzt (vgl. dazu beispielsweise die US-Patentschrift 2,953,837. Die in dieser Schritt angegebenen Zahlenwerte, nämlich 38 % bis 41 %, für den Acetylgehalt entsprechen den zuvor genannten Werten 53 % bis 57 % für die Acetylzahl).
Im Vergleich mit anderen, insbesondere synthetischen Polymeren ist ein solches Celluloseacetat zwar gut biologisch abbaubar, jedoch sind die Zeiträume, nach denen Zigarettenfilter aus einem solchen Material in Faserform unter der Einwirkung von Umgebungseinflüssen zumindest optisch verschwunden sind, unter heutigen Gesichtspunkten zu lang.

Die deutsche Offenlegungsschrift 40 13 293 und die deutsche Offenlegungsschrift 40 13 304 beschreiben zwar Zigarettenfilter, die unter Einwirkung von Umgebungseinflüssen relativ schnell zersetzbar sind, jedoch bestehen diese Zigarettenfilter aus einem Abschnitt eines queraxial verdichteten Faserstrangs aus Fasern aus gesponnenem PHB (Polyhydroxybuttersäure) oder einem Copolymer aus PHB und PHV (Polyhydroxyvaleriansäure). Solche Polymere werden derzeit nicht, zumindest nicht in nennenswertem Umfang, zur Herstellung von Filtertow und Tabakrauchfilterelementen verwendet, was sich möglicherweise
- mit der zu geringen industriellen Verfügbarkeit dieser Polymere,
- mit der gegenüber Celluloseacetat unterschiedlichen Geschmacksbeeinflussung des Rauches
   und
- mit noch ungeklärten verfahrenstechnischen Problemen bei der Verarbeitung solcher Polymere zu Filtertow und Tabakrauchfilterelementen (beispielsweise in Zusammenhang mit der Härtung solcher Tabakrauchfilterelemente oder in Zusammenhang mit der Verwendung von problematischen Lösungsmitteln beim Erspinnen von Fäden aus diesen Polymeren)
   erklären läßt.

Aus der deutschen Offenlegungsschrift 39 14 022 sind neue, biologisch durch Kompostieren leicht abbaubare Kunststoffmaterialien und ihre Verwendung zur Herstellung von Hüllen/Behältern für Öllichte, Ewiglichtölkerzen, Kompositionsöllichte, andere Grablichtausführungen, Opferlichten und Folien bekannt. Als Kunststoffmaterialien werden in der deutschen Offenlegungsschrift 39 14 022 solche auf der Basis von Celluloseestern, wie Celluloseacetat, mit Zusätzen, wie Polyester, Zitronensäureestern, Phosphorsäureestern und organischen Eisenverbindungen genannt. Der deutschen Offenlegungsschrift 39 14 022 ist jedoch keinerlei Hinweis auf die Möglichkeit zur Beschleunigung des biologischen Abbaus von Filtertow und Tabakrauchfilterelementen zu entnehmen. Außerdem ist die in der deutschen Offenlegungsschrift 39 14 022 beschriebene Rezeptur zur Herstellung von Filtertow und Tabakrauchfilterelementen wegen des zu hohen Weichmacheranteils im Celluloseacetat auch nicht geeignet.

Filtertow und Tabakrauchfilterelemente aus Celluloseacetatfasern, auf deren Oberfläche ein Zusatzmittel vorhanden ist, sind ferner aus beispielsweise der deutschen Patentschrift 1 079 521 bekannt. Gemäß der deutschen Patentschrift 1 079 521 dient das auf die Oberfläche der Celluloseacetatfasern aufgebrachte Zusatzmittel dazu, die Rauhheit dieser Fasern zu verbessern. Der deutschen Patentschrift 1 079 521 ist jedoch keinerlei Anregung zu entnehmen, die biologische Abbaubarkeit des Filtertows und der Tabakrauchfilterelemente zu beschleunigen.

In jüngster Zeit wurde in mehreren wissenschaftlichen Publikationen der mikrobiologische Abbau von Celluloseacetat unter den unterschiedlichsten Umweltbedingungen beschrieben.
So beschreibt beispielsweise die Publikation "DEGRADATION OF CELLULOSE ACETATE FILTERS IN AQUEOUS SYSTEMS" von Eberhard Teufel und Rolf Willmund, als Vortrag gehalten auf dem "JOINT MEETING OF SMOKE AND TECHNOLOGY GROUPS" der CORESTA am 16. September 1991 in Utrecht, Niederlande, den Mechanismus des biologischen Abbaus von Celluloseacetat.
Eine weitere Publikation, nämlich "THE FATE OF CELLULOSE ACETATE IN THE ENVIRONMENT: AEROBIC BIODEGRADATION OF FILTER TOW FIBERS" von Charles M. Buchanan, Robert M. Gardner, Ronald J. Komarek und David Strickler, als Vortrag gehalten auf der "TOBACCO CHEMIST RESEARCH CONFERENCE" am 22. Oktober 1991 in Asheville, North Carolina, U.S.A., beschreibt den aeroben Abbau von Celluloseacetat.
Eine andere Publikation, nämlich "Effects of Natural Polymer Acetylation on the Anaerobic Bioconversion to Methane and Carbon Dioxide", von C. J. Rivard et al, veröffentlicht in "Applied Biochemistry and Biotechnology", Volume 34/35, 1992, Seiten 725 bis 736, beschreibt den anaeroben Abbau von Celluloseacetat.

Aus den drei zuvor erwähnten Publikationen geht hervor, daß sowohl der aerobe Abbau als auch der anaerobe Abbau von Celluloseacetat mit abnehmender Acetylzahl schneller vonstatten geht.

Den genannten Publikationen ist jedoch keinerlei Hinweis auf die Möglichkeit zur Beschleunigung des biologischen Abbaus von Filtertow und Tabakrauchfilterelementen aus Celluloseacetat zu entnehmen:
Insbesondere die beiden zuletzt genannten Publikationen lassen erkennen, daß der biologische Abbau von Celluloseacetat beschleunigt werden kann, wenn man dessen Acetylzahl verringert, jedoch sagen sie nichts darüber aus, wie dieses für Filtertow und
Tabakrauchfilterelemente aus Celluloseacetatfasermaterial technisch realisierbar wäre.

Eine zusammenschauende Betrachtung des Standes der Technik zeigt also, daß für aus Celluloseacetatfasermaterial bestehendes Filtertow sowie Tabakrauchfilterelemente, die aus einem solchen Filtertow hergestellt sind, noch keine Lösung bekannt ist, deren biologischer Abbau zu bescheunigen.

Der Erfindung liegt somit die Aufgabe zugrunde, ein Filtertow, bestehend aus Celluloseacetatfilamenten und/Celluloseacetatspinnfasern, zur Verfügung zu stellen, das einen verbesserten biologischen Abbau unter der Einwirkung von Umgebungseinflüssen aufweist.
Der Erfindung liegt auch die Aufgabe zugrunde, ein Verfahren zur Herstellung eines solchen Filtertows zur Verfügung zu stellen. Ferner liegt der Erfindung die Aufgabe zugrunde, ein Tabakrauchfilterelement, bestehend aus einem Abschnitt eines queraxial verdichteten, mit Hilfe eines Weichmachers für Celluloseacetat oder eines Klebstoffes gehärteten Filtertows aus Celluloseacetatfilamenten und/oder Celluloseacetatspinnfasern, zur Verfügung zu stellen, das einen verbesserten biologischen Abbau unter der Einwirkung von Umgebungseinflüssen aufweist.
Schließlich liegt der Erfindung auch noch die Aufgabe zugrunde, ein Verfahren zur Herstellung eines solchen Tabakrauchfilterelements zu schaffen.

Bezüglich des Filtertows wird die Aufgabe gelöst durch ein Filtertow, bestehend aus Celluloseacetatfilamenten und/oder Celluloseacetatspinnfasern, auf deren Oberfläche ein Zusatzmittel vorhanden ist, wobei das Filtertow dadurch gekennzeichnet ist, daß das Zusatzmittel aus cellulosekettenspaltenden Enzymen besteht und zumindest die Oberfläche der Celluloseacetatfilamente und der Celluloseacetatspinnfasern aus einem Celluloseacetat mit einer Acetylzahl von weniger als 53 %, vorzugsweise von weniger als 49 %, besteht.

Die Aufgabe wird bezüglich des Verfahrens zur Herstellung des Filtertows gelöst durch ein Verfahren zur Herstellung eines Filtertows durch im wesentlichen
- Erspinnen von Celluloseacetatfilamenten durch Pressen einer Lösung von Celluloseacetat mit einer Acetylzahl von mindestens 53 % in Aceton durch eine Spinndüse mit mehreren Öffnungen und gegebenenfalls anschließendes Zerschneiden der Celluloseacetatfilamente zu Celluloseacetatspinnfasern,
- Zusammenfassen einer Vielzahl der so erhaltenen Celluloseacetatfilamente und/oder Celluloseacetatspinnfasern zu einem Filtertow
   und
- Aufbringen eines Zusatzmittels auf die Oberfläche der Celluloseacetatfilamente und der Celluloseacetatspinnfasern,
   wobei das Verfahren dadurch gekennzeichnet ist, daß
- die Celluloseactatfilamente und die Celluloseacetatspinnfasern einer Hydrolyse der Art unterzogen werden, daß zumindest das an der Oberfläche befindliche Celluloseacetat dieser Filamente und Spinnfasern nach der Hydrolysebehandlung eine Acetylzahl von weniger als 53 %, vorzugsweise von weniger als 49 %, aufweist,
   und
- als Zusatzmittel ein solches aus cellulosekettenspaltenden Enzymen aufgebracht wird.

Vorzugsweise wird die Hydrolysebehandlung mit Hilfe von Natronlauge oder mit Hilfe von gasförmigem Ammoniak nach dem Erspinnen der Celluloseacetatfilamente bzw. nach dem Zerschneiden der Celluloseacetatfilamente zu Celluloseacetatspinnfasern durchgeführt.

Bezüglich des Tabakrauchfilterelements wird die Aufgabe gelöst durch ein Tabakrauchfilterelement, bestehend aus einem Abschnitt eines queraxial verdichteten, mit Hilfe eines Weichmachers für Celluloseacetat oder eines Klebstoffes gehärteten Filtertows aus Celluloseacetatfilamenten und/oder Celluloseacetatspinnfasern, auf deren Oberfläche ein Zusatzmittel vorhanden ist, dadurch gekennzeichnet, daß das Zusatzmittel aus cellulosekettenspaltenden Enzymen besteht und zumindest die Oberfläche der Celluloseacetatfilamente und der Celluloseacetatspinnfasern aus einem Celluloseacetat mit einer Acetylzahl von weniger als 53 %, vorzugsweise von weniger als 49 %, besteht.

Die Aufgabe wird bezüglich des Verfahrens zur Herstellung des Tabakrauchfilterelements gelöst durch ein Verfahen zur Herstellung eines Tabakrauchfilterelements durch Versehen eines Filtertows, bestehend aus Celluloseacetatfilamenten und/oder Celluloseacetatspinnfasern, mit einem Weichmacher für Celluloseacetat oder einem Klebstoff, anschließendes queraxiales Verdichten und gegebenenfalls Umhüllen dieses Filtertows mit einem Umhüllungsstreifen, Zerschneiden des so verdichteten und gegebenenfalls umhüllten Filtertows in einzelne Tabakrauchfilterstäbe und schließlich Zerschneiden dieser Tabakrauchfilterstäbe in einzelne Tabakrauchfilterelemente, wobei das Verfahren dadurch gekennzeichnet ist, daß
- als Filtertow ein solches gemäß Anspruch 1 eingesetzt wird
   oder
- als Filtertow ein solches eingesetzt wird, bei dem das Celluloseacetat, aus dem die Celluloseacetatfilamente und die Celluloseacetatspinnfasern bestehen, in Aceton löslich ist und eine Acetylzahl von mindestens 53 % aufweist, die Celluloseacetatfilamente bzw. die Celluloseacetatspinnfasern einer Hydrolysebehandlung der Art unterzogen werden, daß zumindest das an der Oberfläche befindliche Celluloseacetat dieser Filamente und Spinnfasern nach der Hydrolysebehandlung eine Acetylzahl von weniger als 53 %, vorzugsweise von weniger als 49 %, aufweist, und auf die Oberfläche der Celluloseacetatfilamente und der Celluloseacetatspinnfasern ein Zusatzmittel aus cellulosekettenspaltenden Enzymen aufgebracht wird.

Vorzugsweise wird die Hydrolysebehandlung
- mit Hilfe von Natronlauge
   oder
- mit Hilfe von gasförmigem Ammoniak
   durchgeführt.

Die für die Erfindung eingesetzten cellulosekettenspaltenden Enzyme sind Cellulasen; beispielsweise können für die Erfindung solche Cellulasen verwendet werden, die aus Trichoderma viridi gewonnen werden.

Selbstverständlich kann die Hydrolysebehandlung gemäß der Erfindung auch mit Hilfe anderer Hydrolysemittel als Natronlauge und Ammoniak durchgeführt werden, beispielsweise mit Hilfe von anderen starken Basen oder Säuren, oder sogar mit Hilfe von esterspaltenden Enzymen, wie Esterasen.

Unter einem Filtertow im Sinne der Erfindung soll ein Band aus einer Vielzahl von Celluloseacetatfilamenten und/oder Celluloseacetatspinnfasern verstanden werden (vgl. dazu auch die Definition des Begriffes "Filtertow" in beispielsweise der deutschen Offenlegungsschrift 41 09 603). Vorzugsweise ist das erfindungsgemäße Filtertow ein Band aus einer Vielzahl von Celluloseacetatfilamenten, wobei diese Filamente gekräuselt, insbesondere stauchkammergekräuselt sein können.
Unter einem Filament ist eine praktisch endlose Faser zu verstehen, und der Ausdruck "Spinnfaser" bedeutet eine Faser begrenzter Länge (vergleiche zu diesen beiden Definitionen "Römpps Chemie-Lexikon, achte, neubearbeitete und erweiterte Auflage, Franckh'sche Verlagshandlung, W. Keller & Co., Stuttgart/1987, resp. Band 2, Seite 1283, und Band 5, Seite 3925 - unter Hinweis auf DIN 60 001 T2 vom Dezember 1974).
Das Tabakrauchfilterelement gemäß der Erfindung ist vorzugsweise ein Zigarettenfilter, es kann jedoch auch ein Filter für Zigarren, Zigarillos oder Tabakpfeifen sein.
Unter Acetylzahl versteht man im Sinne der Erfindung den Anteil an gebundener Essigsäure im Celluloseacetat, ausgedrückt in Masse-% (vgl. dazu auch Ullmann's Encyclopedia of Industrial Chemistry, Fifth, Completely Revised Edition, Volume A 5, Seiten 444 und 445 - VCH Verlagsgesellschaft mbH, D-6940 Weinheim, Federal Republic of Germany 1986).

Mit der Erfindung werden folgende Vorteile erreicht:

Das Filtertow und das Tabakrauchfilterelement gemäß der Erfindung zeigen gegenüber bekanntem Filtertow und bekannten Tabakrauchfilterelementen aus Celluloseacetatfasermaterial eine Beschleunigung der Verrottungsgeschwindigkeit unter Umgebungseinflüssen; dennoch ist die Lagerung des Filtertows und des Tabakrauchfilterelements gemäß der Erfindung unter den heute üblichen Bedingungen ohne die Gefahr des mikrobiologischen Abbaus ohne weiteres möglich.

Von besonderem Vorteil ist, daß man für die Herstellung des erfindungsgemäßen Filtertows zunächst einmal vom konventionellen Verfahren zur Herstellung eines aus Celluloseacetatfasermaterial bestehenden Filtertows ausgehen kann; durch die zusätzliche erfindungsgemäße Maßnahme der Hydrolyse erhält man jedoch ein Filtertow, dessen Celluloseacetatfilamente und/oder Celluloseacetatspinnfasern zumindest an deren Oberfläche ein Celluloseacetat mit einer Acetylzahl von weniger als 53 %, vorzugsweise von weniger als 49 %, aufweisen. Ein solchermaßen modifiziertes Celluloseacetat läßt sich unter der Einwirkung von cellulosekettenspaltenden Enzymen in niedermolekulare, wasserlösliche und mikrobiologisch gut abbaubare Komponenten spalten.
Zur Erklärung sei dazu erwähnt, daß das zuvor erwähnte, erwünschte Celluloseacetat mit einer Acetylzahl von weniger als 49 % nicht in Aceton löslich ist und somit nicht nach dem traditionellen Spinnverfahren (mit Aceton als Lösungsmittel) zu Filamenten versponnen werden kann.
Durch die Beibehaltung des Prinzips des konventionellen Verfahens zur Herstellung eines aus Celluloseacetatfasermaterial bestehenden Filtertows können ferner die Investitionskosten für die Apparatur zur Durchführung des erfindungsgemäßen Verfahrens zur Herstellung des - erfindungsgemäßen - Filtertows relativ niedrig gehalten werden (bei bestehenden Apparaturen bedarf es zur Durchführung dieses erfindungsgemäßen Verfahrens lediglich einer zusätzlichen Anordnung für die Hydrolyse sowie einer zusätzlichen Anordnung für die Aufbringung der cellulosekettenspaltenden Enzyme).

Ähnliches gilt für die Herstellung des erfindungsgemäßen Tabakrauchfilterelements.

Die Erfindung wird nachstehend anhand eines Beispiels noch näher erläutert.

### Vergleichsbeispiel

Es wurde eine Celluloseacetat-Spinnlösung mit einem Feststoffgehalt von 28 Masse-% Celluloseacetat und 0,5 Masse-% Titandioxid in Aceton hergestellt. Der Wassergehalt dieser Spinnlösung wurde auf 3 Masse-% eingestellt. Das eingesetzte Celluloseacetat hatte eine Acetylzahl von 55,4 % und einen Polymerisationsgrad (DP) von 220. Diese Spinnlösung wurde filtriert und durch Trockenspinnen auf einer herkömmlichen Filtertow-Spinnanlage versponnen. Die gebildeten Celluloseacetatfilamente wurden zu einem Band zusammengefaßt, mit Hilfe einer Stauchkammerkräuselmaschine gekräuselt und in einem Trommeltrockner getrocknet. Das zuvor erwähnte Band hatte beim Eintritt in die Stauchkammerkräuselmaschine eine Eintrittsgeschwindigkeit von 550 m/min. Die Verweildauer des Bandes aus gekräuselten Celluloseacetatfilamenten im Trommeltrockner war 5 Minuten. Das so entstandene Filtertow aus stauchkammergekräuselten Celluloseacetatfilamenten wurde mit Hilfe einer Packmaschine zunächst lose abgelegt und anschließend zu einem Ballen verpreßt; der Ballen hatte eine Restfeuchte von 5,5 Masse-%.
Die Spezifikation des so hergestellten Filtertows war 3 Y 35 HK. Diese Spezifikationsbezeichnung bedeutet

| | |
|---|---|
| Filamenttiter: | 3,3 dtex |
| Gesamttiter: | 38.500 dtex |
| Querschnittsform der Celluloseacetatfilamente: | Y. |

Das zuvor erwähnte Filtertow wurde auf einer Filterstabmaschine des Typs KDF 2/AF 2 der Firma Körber AG, Hamburg, Bundesrepublik Deutschland, mit einer Stranggeschwindigkeit von 400 m/min zu Filterstäben folgender Spezifikation verarbeitet:

| | |
|---|---|
| Länge: | 126 mm |
| Durchmesser: | 7,85 mm |
| Zugwiderstand: | 390 da Pa |
| Gewicht an Celluloseacetat: | 690 mg. |

Bei der Produktion dieser Filterstäbe wurde als Weichmacher für das Celluloseacetat Triacetin aufgebracht, und zwar so, daß die fertigen Filterstäbe 55 mg Triacetin pro Filterstab enthielten.

Die Filterstäbe wurden jeweils in 6 gleichlange Zigarettenfilter mit einer Länge von 21 mm zerschnitten.

Die Ergebnisse der Abbauversuche in vitro werden nach den Beispielen aufgeführt.

### Beispiel

10 kg des gemäß Vergleichsbeispiel hergestellten Filtertows wurde unter Laborbedingungen wie folgt hydrolisiert:

Das Filtertow wurde in ein Gefäß eingebracht, wonach dieses Gefäß verschlossen wurde.
Das Filtertow wurde in dem geschlossenen Gefäß jeweils nacheinander und jeweils für die Dauer von einer Stunde der Einwirkung von
- Wasserdampf,
- Ammoniak-Dampf
   und
- Kohlendioxid-Gas
   ausgesetzt. Zwischen den einzelnen, zuvor geschilderten Stufen wurde das Gefäß evakuiert.
Die zuvor erwähnte, aus drei Stufen bestehende Behandlung wurde dreimal wiederholt.
Anschließend wurde das Filtertow dem Gefäß entnommen und bezüglich Acetylzahl und Löslichkeit untersucht. Die Ergebnisse dieser Untersuchung waren folgende:

| | |
|---|---|
| Acetylzahl: | 45 % |
| Löslichkeit: | Die Lösung des Filtertows in Aceton (3 %) enthielt deutlich sichtbare Mengen an unlöslichen Anteilen. |

Das zuvor erwähnte Filtertow wurde auf einer Filterstabmaschine des Typs KDF 2/AF 2 der Firma Körber AG, Hamburg, Bundesrepublik Deutschland, mit einer Stranggeschwindigkeit von nunmehr 50 m/min zu Filterstäben verarbeitet.
Bei der Produktion dieser Filterstäbe wurde als Weichmacher für das Celluloseacetat Triacetin aufgebracht, und zwar so, daß die fertigen Filterstäbe 55 mg Triacetin pro Filterstab enthielten.
Abweichend von der Herstellung der Filterstäbe gemäß Vergleichsbeispiel war die Filterstabmaschine dahingehend modifiziert, daß zwischen der Umlenkwalze des Aufbereitungsteils AF 2 und der Einlaufdüse des Strangteils KDF 2 eine Pulverdosierungsvorrichtung angebracht war. Mit Hilfe dieser Pulverdosierungsvorrichtung wurde ein pulverförmiges cellulosekettenspaltendes Enzym auf das Filtertow aufgebracht. Als cellulosekettenspaltendes Enzym wurde eine Cellulase aus Trichoderma viridi, nämlich 1,4-[1,3; 1,4]-β-D-Glucan 4-glucanohydrolase der Firma Sigma Chemie GmbH, Bundesrepublik Deutschland, verwendet.

Die hergestellten Filterstäbe hatten folgende Spezifikation:

| | |
|---|---|
| Länge: | 126 mm |
| Durchmesser: | 7,85 mm |
| Zugwiderstand: | 390 da Pa |
| Gewicht an Celluloseacetat: | 690 mg |
| Gewicht an cellulosekettenspaltendem Enzym (Cellulase): | 3 mg. |

Die so hergestellten Filterstäbe wurden, wie im Vergleichsbeispiel, jeweils in 6 Zigarettenfilter mit einer Länge von 21 mm zerschnitten.

Die Ergebnisse der Abbauversuche in vitro werden nachfolgend zusammenfassend aufgeführt.

### Abbauversuche in vitro

Je ein Zigarettenfilter gemäß Vergleichsbeispiel und gemäß Beispiel wurden zunächst einmal vom Filterumhüllungspapier befreit, gewogen und anschließend jeweils in einem sterilen Erlenmeyerkolben mit 10 ml sterilem Wasser versehen.
Außerdem wurde ein Zigarettenfilter gemäß Vergleichsbeispiel ebenfalls vom Filterumhüllungspapier befreit, gewogen und in einem sterilen Erlenmeyerkolben mit einer Enzymlösung versehen, die 0,05 mg/ml der im Beispiel genannten Cellulase enthielt.
Die zuvor beschriebenen Proben wurden mehrfach angesetzt.

Jeweils nach 3 Tagen und 28 Tagen wurden die von dem Zigarettenfiltern übriggebliebenen Faserreste dem Erlenmeyerkolben entnommen, getrocknet, auf Gleichgewichtsfeuchte konditioniert und gewogen.

Die Ergebnisse dieser Abbautests sind in folgender Tabelle aufgeführt, wobei zu beachten ist, daß der Gewichtsverlust, der durch das Herauslösen eines Teils des Triacetins durch das Wasser verursacht wurde, nicht berücksichtigt wurde. Aufgrund der Ungenauigkeit wegen des Herauslösens eines Teils des Triacetins und auch weiterer Ungenauigkeiten (wegen der Restfeuchte etc.) wird ein Gewichtsverlust der Zigarettenfilter von weniger als 5 % als nicht signifikant für den enzymatischen Abbau betrachtet.

| | % Gewichtsverlust nach Tagen | |
|---|---|---|
| | 3 | 28 |
| Zigarettenfilter nach Vergleichsbeispiel | 1 | 2 |
| Zigarettenfilter nach Vergleichsbeispiel + Enzymlösung | 2 | 2 |
| Zigarettenfilter nach Beispiel | 37 | 80 |

## Patentansprüche

1. Filtertow, bestehend aus Celluloseacetatfilamenten und/oder Celluloseacetatspinnfasern, auf deren Oberfläche ein Zusatzmittel vorhanden ist, dadurch gekennzeichnet, daß das Zusatzmittel aus cellulosekettenspaltenden Enzymen besteht und zumindest die Oberfläche der Celluloseacetatfilamente und der Celluloseacetatspinnfasern aus einem Celluloseacetat mit einer Acetylzahl von weniger als 53 %, vorzugsweise von weniger als 49 %, besteht.

2. Verfahren zur Herstellung eines Filtertows nach Anspruch 1 durch im wesentlichen
- Erspinnen von Celluloseacetatfilamenten durch Pressen einer Lösung von Celluloseacetat mit einer Acetylzahl von mindestens 53 % in Aceton durch eine Spinndüse mit mehreren Öffnungen und gegebenenfalls anschließendes Zerschneiden der Celluloseacetatfilamente zu Celluloseacetatspinnfasern,
- Zusammenfassen einer Vielzahl der so erhaltenen Celluloseacetatfilamente und/oder Celluloseacetatspinnfasern zu einem Filtertow
und
- Aufbringen eines Zusatzmittels auf die Oberfläche der Celluloseacetatfilamente und der Celluloseacetatspinnfasern,
dadurch gekennzeichnet, daß
- die Celluloseacetatfilamente und die Celluloseacetatspinnfasern einer Hydrolysebehandlung der Art unterzogen werden, daß zumindest das an der Oberfläche befindliche Celluloseacetat dieser Filamente und Spinnfasern nach der Hydrolysebehandlung eine Acetylzahl von weniger als 53 %, vorzugsweise von weniger als 49 %, aufweist,
und
- als Zusatzmittel ein solches aus cellulosekettenspaltenden Enzymen aufgebracht wird.

3. Verfahren nach Anspruch 2, dadurch gekennzeichnet, daß die Hydrolysebehandlung mit Hilfe von Natronlauge oder mit Hilfe von gasförmigem Ammoniak nach dem Erspinnen der Celluloseacetatfilamente bzw. nach dem Zerschneiden der Celluloseacetatfilamente zu Celluloseacetatspinnfasern durchgeführt wird.

4. Tabakrauchfilterelement, bestehend aus einem Abschnitt eines queraxial verdichteten, mit Hilfe eines Weichmachers für Celluloseacetat oder eines Klebstoffes gehärteten Filtertows aus Celluloseacetatfilamenten und/oder Celluloseacetatspinnfasern, auf deren Oberfläche ein Zusatzmittel vorhanden ist, dadurch gekennzeichnet, daß das Zusatzmittel aus cellulosekettenspaltenden Enzymen besteht und zumindest die Oberfläche der Celluloseacetatfilamente und der Celluloseacetatspinnfasern aus einem Celluloseacetat mit einer Acetylzahl von weniger als 53 %, vorzugsweise von weniger als 49 %, besteht.

5. Verfahren zur Herstellung eines Tabakrauchfilterelements nach Anspruch 4 durch Versehen eines Filtertows, bestehend aus Celluloseacetatfilamenten und/oder Celluloseacetatspinnfasern, mit einem Weichmacher für Celluloseacetat oder einem Klebstoff, anschließendes queraxiales Verdichten und gegebenenfalls Umhüllen dieses Filtertows mit einem Umhüllungsstreifen, Zerschneiden des so verdichteten und gegebenenfalls umhüllten Filtertows in einzelne Tabakrauchfilterstäbe und schließlich Zerschneiden dieser Tabakrauchfilterstäbe in einzelne Tabakrauchfilterelemente, dadurch gekennzeichnet, daß
- als Filtertow ein solches gemäß Anspruch 1 eingesetzt wird
oder
- als Filtertow ein solches eingesetzt wird, bei dem das Celluloseacetat, aus dem die Celluloseacetatfilamente und die Celluloseacetatspinnfasern bestehen, in Aceton löslich ist und eine Acetylzahl von mindestens 53 % aufweist, die Celluloseacetatfilamente bzw. die Celluloseacetatspinnfasern einer Hydrolysebehandlung der Art unterzogen werden, daß zumindest das an der Oberfläche befindliche Celluloseacetat dieser Filamente und Spinnfasern nach der Hydrolysebehandlung eine Acetylzahl von weniger als 53 %, vorzugsweise von weniger als 49 %, aufweist, und auf die Oberfläche der Celluloseacetatfilamente und der Celluloseacetatspinnfasern ein Zusatzmittel aus cellulosekettenspaltenden Enzymen aufgebracht wird.

6. Verfahren nach Anspruch 5, dadurch gekennzeichnet, daß die Hydrolysebehandlung
- mit Hilfe von Natronlauge
oder
- mit Hilfe von gasförmigem Ammoniak
durchgeführt wird.

## Claims

1. Filter tow consisting of cellulose acetate filaments and/or fibres having an additive on their surface, characterized in that the additive consists of cellulolytic enzymes and at least the surface of the cellulose acetate filaments and of the cellulose acetate fibres consists of a cellulose acetate having an acetyl number of less than 53 %, preferably less than 49 %.

2. Process for producing a filter tow according to Claim 1 by essentially
- spinning cellulose acetate filaments by pressing a solution of cellulose acetate having an acetyl number of at least 53 % in acetone through a spinneret having a plurality of orifices and then optionally cutting the cellulose acetate filaments into cellulose acetate fibres,
- collecting a multiplicity of the cellulose acetate filaments and/or fibres thus obtained to form a filter tow
and
- applying an additive to the surface of the cellulose acetate filaments and the cellulose acetate fibres,
characterized in that
- the cellulose acetate filaments and the cellulose acetate fibres are subjected to a hydrolysis treatment such that at least the surface cellulose acetate of these filaments and fibres has an acetyl number of less than 53 %, preferably less than 49 %, after the hydrolysis treatment,
and
- the additive applied is an additive composed of cellulolytic enzymes.

3. Process according to Claim 2, characterized in that the hydrolysis treatment is carried out with the aid of caustic soda or with the aid of gaseous ammonia after the spinning of the cellulose acetate filaments or after the cutting of the cellulose acetate filaments into fibres.

4. Tobacco smoke filter element consisting of a section of a transverse-axially compacted filter tow composed of cellulose acetate filaments and/or cellulose acetate fibres and set with the aid of a plasticizer for cellulose acetate or with the aid of an adhesive, an additive being present on the surface of the cellulose acetate filaments and/or fibres, characterized in that the additive consists of cellulolytic enzymes and at least the surface of the cellulose acetate filaments and of the cellulose acetate fibres consists of a cellulose acetate having an acetyl number of less than 53 %, preferably less than 49 %.

5. Process for producing a tobacco smoke filter element according to Claim 4 by providing a filter tow consisting of cellulose acetate filaments and/or fibres with a plasticizer for cellulose acetate or an adhesive, then transverse-axially compacting and optionally sheathing this filter tow with a sheathing strip, cutting the thus compacted and optionally sheathed filter tow into individual tobacco smoke filter rods and finally cutting these tobacco smoke filter rods into individual tobacco smoke filter elements, characterized in that
- the filter tow used is a filter tow as claimed in Claim 1,
or
- the filter tow used is a filter tow wherein the cellulose acetate of which the cellulose acetate filaments and the cellulose acetate fibres consist is soluble in acetone and has an acetyl number of at least 53 %, the cellulose acetate filaments and cellulose acetate fibres are subjected to a hydrolysis treatment such that at least the surface cellulose acetate of these filaments and fibres has an acetyl number of less than 53 %, preferably less than 49 %, after the hydrolysis treatment, and the additive applied to the surface of the cellulose acetate filaments and fibres is an additive composed of cellulolytic enzymes.

6. Process according to Claim 5, characterized in that the hydrolysis treatment is carried out
- with the aid of caustic soda
or
- with the aid of gaseous ammonia.

## Revendications

1. Cordon filtrant composé de filaments d'acétate de cellulose et/ou de fibres à filer d'acétate de cellulose, sur la surface desquels on trouve un additif, caractérisé en ce que l'additif se compose d'enzymes clivant les chaînes de cellulose et qu'au moins la surface des filaments d'acétate de cellulose et des fibres à filer d'acétate de cellulose est composée d'un acétate de cellulose comprenant un pourcentage de groupe acétyle de moins de 53 %, de préférence, de moins de 49 %.

2. Procédé de fabrication d'un cordon filtrant selon la revendication 1, comprenant sensiblement les étapes consistant à :
- filer des filaments d'acétate de cellulose par pressage d'une solution d'acétate de cellulose dans de l'acétone, ayant un pourcentage de groupe acétyle d'au moins 53 %, à travers une filière présentant plusieurs ouvertures et, le cas échéant, suivi du découpage des filaments d'acétate de cellulose en fibres à filer d'acétate de cellulose,
- assembler une pluralité des filaments d'acétate de cellulose et/ou des fibres à filer d'acétate de cellulose ainsi obtenus pour former un cordon filtrant
et
- déposer un additif sur la surface des filaments d'acétate de cellulose et des fibres à filer d'acétate de cellulose,
caractérisé en ce que
- les filaments d'acétate de cellulose et les fibres à filer d'acétate de cellulose sont soumis à un traitement par hydrolyse de telle manière qu'au moins l'acétate de cellulose se trouvant à la surface de ces filaments et de ces fibres à filer présente, après le traitement par hydrolyse, un pourcentage de groupe acétyle de moins de 53%, de préférence de moins de 49 %,
et en ce que
- l'on dépose en tant qu'additif, un additif du type contenant des enzymes clivant les chaînes de cellulose.

3. Procédé selon la revendication 2, caractérisé en ce que le traitement par hydrolyse est effectué à l'aide de soude caustique ou bien à l'aide d'ammoniac sous forme gazeuse, après le filage des filaments d'acétate de cellulose ou bien après le découpage des filaments d'acétate de cellulose pour donner des fibres à filer d'acétate de cellulose.

4. Elément de filtre pour fumée de tabac composé d'une portion d'un cordon filtrant compressé le long de son axe transversal, durci au moyen d'un plastifiant pour acétate de cellulose ou d'une colle, composé de filaments d'acétate de cellulose et/ou de fibres d'acétate de cellulose, à la surface desquels on trouve un additif, caractérisé en ce que l'additif se compose d'enzymes clivant les chaînes de cellulose, et qu'au moins la surface des filaments d'acétate de cellulose et des fibres à filer d'acétate de cellulose est composée d'un acétate de cellulose comprenant un pourcentage de groupe acétyle de moins de 53 %, de préférence, de moins de 49 %.

5. Procédé de fabrication d'un élément de filtre pour fumée de tabac selon la revendication 4, par le traitement d'un cordon filtrant composé de filaments d'acétate de cellulose et/ou de fibres à filer d'acétate de cellulose, au moyen d'un plastifiant pour acétate de cellulose ou d'une colle, suivi d'une compression le long de l'axe transversal, et, le cas échéant, d'un enveloppement de ce cordon filtrant à l'aide d'une bande enveloppante, par le découpage du cordon filtrant ainsi compressé et éventuellement enveloppé, en bâtons individuels filtrant la fumée de tabac, suivi du découpage de ces bâtons filtrant la fumée de tabac en éléments individuels de filtres pour fumée de tabac, caractérisé en ce que
- l'on utilise comme cordon filtrant un cordon du type conformément à la revendication 1,
ou
- l'on utilise comme cordon filtrant un cordon pour lequel l'acétate de cellulose dans lequel les filaments d'acétate de cellulose et les fibres à filer d'acétate de cellulose sont fabriqués, est soluble dans l'acétone et présente un pourcentage de groupe acétyle d'au moins 53 %, où les filaments d'acétate de cellulose ou bien les fibres à filer d'acétate de cellulose sont soumis à un traitement par hydrolyse de telle manière qu'au moins l'acétate de cellulose se trouvant à la surface de ces filaments et de ces fibres à filer présente, après le traitement par hydrolyse, un pourcentage de groupe acétyle de moins de 53%, de préférence de moins de 49 %, et où l'on dépose sur la surface des filaments d'acétate de cellulose et des fibres à filer d'acétate de cellulose un additif contenant des enzymes clivant les chaînes de cellulose.

6. Procédé selon la revendication 5, caractérisé en ce que le traitement par hydrolyse est réalisé
- à l'aide de soude caustique
ou
- à l'aide d'ammoniac sous forme gazeuse.
